(19) **Europäisches Patentamt**
**European Patent Office**
**Office européen des brevets**

(11) **EP 2 705 977 B1**

(12) **EUROPÄISCHE PATENTSCHRIFT**

(45) Veröffentlichungstag und Bekanntmachung des Hinweises auf die Patenterteilung:
**09.02.2022 Patentblatt 2022/06**

(21) Anmeldenummer: **13175012.7**

(22) Anmeldetag: **04.07.2013**

(51) Internationale Patentklassifikation (IPC):
***B60L 50/51*** (2019.01) ***B60L 15/20*** (2006.01)
***B60L 7/14*** (2006.01)

(52) Gemeinsame Patentklassifikation (CPC):
**B60L 15/20; B60L 7/14; B60L 50/51;**
B60L 2200/42; B60L 2240/12; B60L 2240/421;
B60L 2240/423; B60L 2250/26; Y02T 10/64;
Y02T 10/70; Y02T 10/72

(54) **Regelungsverfahren für Elektrofahrzeuge**

Control method for electric vehicles

Procédé de régulation pour véhicules électriques

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.07.2012 DE 102012106535**

(43) Veröffentlichungstag der Anmeldung:
**12.03.2014 Patentblatt 2014/11**

(73) Patentinhaber: **Linde Material Handling GmbH**
**63743 Aschaffenburg (DE)**

(72) Erfinder:
• **Kromm, Dr., Andreas**
**63743 Aschaffenburg (DE)**

• **Manthey, Maik**
**65207 Wiesbaden (DE)**
• **Huber, Franz**
**63739 Aschaffenburg (DE)**

(74) Vertreter: **Patentship Patentanwaltgesellschaft**
**Schertlinstraße 29**
**86159 Augsburg (DE)**

(56) Entgegenhaltungen:
**EP-A1- 1 764 254 EP-A2- 1 916 142**
**DE-A1-102010 020 906 JP-A- 2003 199 214**

**Beschreibung**

Die Erfindung betrifft ein Verfahren zur Regelung des elektrischen Antriebs von Elektrofahrzeugen. Insbesondere betrifft die Erfindung ein Verfahren zur Regelung eines Fahrantriebs eines Elektrofahrzeugs, das durch mindestens einen elektrischen Fahrantriebsmotor angetrieben wird, wobei in einem ersten Betriebszustand eine Drehmomentregelung durchgeführt wird, bei der einer Stellung eines Fahrsignalgebers ein Solldrehmoment des Fahrantriebsmotors zugeordnet ist, und in einem zweiten Betriebszustand eine Drehzahlregelung durchgeführt wird, bei der einer Stellung des Fahrsignalgebers eine Solldrehzahl des Fahrantriebsmotors zugeordnet ist.

Bekannt sind aus dem Stand der Technik elektrische Fahrzeuge mit Asynchronmotoren als Fahrantriebsmotor, bei denen die Regelung des oder der Fahrantriebsmotoren in Abhängigkeit von einem Signal eines Fahrsignalgebers, beispielsweise eines "Gaspedals" oder Fahrpedals durch eine Vektorregelung erfolgt. Die Vektorregelung oder feldorientierte Regelung stützt sich auf eine Regelung der Rotorflussorientierung. Dies entspricht einer zweikanaligen Regelung, bei der sowohl der Rotorfluss wie auch der Statorstrom geregelt werden.

Die EP 1 916 142 A2 offenbart ein Verfahren zur Regelung eines Fahrantriebs eines Elektrofahrzeugs zur Steuerung eines Schlupfes.

Die DE 10 2010 020906 A1 offenbart ein Verfahren zum energieoptimierten Betrieb eines flurgebundenen Schwerlast-Transportfahrzeugs mit einem elektrischen Fahrantrieb.

Die EP 1 764 254 A1 offenbart eine Steuerung eines Motors für ein Flurförderzeug.

Die JP 2003 199214 A offenbart eine Steuerung eines Motors für ein Fahrzeug.

Nach dem Stand der Technik kommt bei Kraftfahrzeugen eine Drehmomentregelung bzw. Steuerung zum Einsatz, um den Fahrantrieb abhängig von einem Signal eines Fahrsignalgebers bzw. Fahrpedals zu regeln. Eine solche Drehmomentregelung bietet die Möglichkeit einer einfachen Realisierung des Regelsystems und es ist nur ein Regler erforderlich als Drehmomentregler. Dadurch ist eine kontinuierliche Beschleunigung erzielbar.

Nachteilig an diesem Stand der Technik ist, dass bei einem Zurückstellen des Fahrpedals auf "Null-Stellung" eine dauerhafte Rekuperation der Bremsenergie und somit auch eine konstante Abbremsung nicht möglich ist, da das Drehmoment an dem Fahrantriebsmotor auf null gestellt wird und es zu einem Ausrollen bzw. Weiterrollen kommt ohne Ansteuerung. Selbst bei einer konstanten Fahrpedalposition besteht somit keine Möglichkeit, eine konstante Geschwindigkeit zu fahren, da bei variablem Lastmoment immer auch die Geschwindigkeit mitvariiert. Daher ist es erforderlich, dass der Fahrer regelmäßig durch das Fahrpedal zur Momentanpassung korrigieren und nachregeln muss, um die gewünschte Geschwindigkeit zu erreichen und beibehalten zu können. In einem Gefälle oder in einer Steigerung rollt das Elektrofahrzeug aus dem Stillstand weiter, da das durch das Fahrpedal vorgegebene Antriebsmoment null ist, jedoch durch den Hangabtrieb das Elektrofahrzeug in Bewegung gesetzt wird. In der Folge ist in einem Gefälle keine dauerhafte, konstante oder definierte Rekuperation der Bremsenergie durch elektrisches Bremsen möglich. Ein solcher Regelvorgang wird sehr lastabhängig, unzuverlässig und wenig reproduzierbar sein. Bei Bergabfahrt in einem Gefälle rollt das Elektrofahrzeug undefiniert aus, wenn das Fahrpedal in seiner Nullstellung losgelassen wird und in dieser verbleibt.

Die ebenfalls aus dem Stand der Technik bekannte Drehzahlregelung wird bei batterieelektrisch angetriebenen Elektrofahrzeugen aus verschiedenen Gründen selten eingesetzt. Eine Geschwindigkeitsregelung ist ohne Überschwingungen unter variablen Lastzuständen nur schwer umsetzbar. Die Regelung durch die klassisch bekannte Einstellung des Betragsoptimums und des symmetrischen Optimums führt bei der Drehzahlregelung zu Überschwingungen. Es kann dazu kommen, dass in einer Steigung das Elektrofahrzeug nicht ausrollt, wenn das Fahrpedal in der Null-Position steht und daher die Solldrehzahl null ist, da die Istdrehzahl ungleich null ist und es zu einer Rekuperation kommt aufgrund der aktiven Drehzahlregelung mit Momentensollwertbildung.

Bei einer reinen Geschwindigkeitsregelung bzw. Drehzahlregelung kann es beim Abbremsen kurz vor dem Stillstand des Elektrofahrzeugs zu einem Rückwärtsrollen kommen, was gegebenenfalls durch einen Fahrer nicht erwartet wird und unerwünscht ist. In der Praxis im Fahrbetrieb kommt es bei der dynamischen Einstellung der Geschwindigkeit üblicherweise zu einem Überschwingen über die Sollgeschwindigkeit. Auch ist ein kontinuierliches Beschleunigen des Elektrofahrzeugs ebenso wie ein kontinuierliches Abbremsen mit der Drehzahlregelung nicht möglich, da der Übergangsprozess ungleichmäßig verläuft. Die Überschwinger stellen sich als nicht aperiodische Übergangsprozesse dar und führen zu einem nicht gleichmäßigen sowie verzögerten und verlangsamten Beschleunigen und Abbremsen. Dies wird zu vermeiden gesucht und führt zu Akzeptanzproblemen bei Benutzern von Elektrofahrzeugen, da das verzögerte Ansprechverhalten dazu führt, dass das Fahrverhalten nicht der Fahrpedalbewegung des Fahrers nachfolgt. Der Fahrer wird bei der Beschleunigung wie auch bei der Verzögerung zu übermäßig starken Fahrpedalsignalen verleitet, die in einem Übersteuern oder Untersteuern resultieren. Aus der DE 42 26 469 C2 ist eine Vorrichtung zum Betrieb eines Antriebsmotors bei einem Elektrofahrzeug bekannt, bei der eine Umschaltung von direkter Drehmomentsteuerung auf eine Drehzahlregelung möglich ist.

Es ist daher Aufgabe der Erfindung, ein Verfahren zur Regelung eines Fahrantriebs eines Elektrofahrzeugs zur Verfügung zu stellen, das die oben genannten Nachteile vermeidet und ein den Erwartungen des Fahrers entgegenkommendes Fahr- und Betriebsverhalten aufweist.

Diese Aufgabe wird durch ein Verfahren zur Regelung eines Fahrantriebs mit den Merkmalen des Patentanspruchs 1 gelöst. Vorteilhafte Weiterbildungen des erfindungsgemäßen Verfahrens sind in den Unteransprüchen angegeben.

Die Aufgabe wird gelöst durch ein Verfahren zur Regelung eines Fahrantriebs eines Elektrofahrzeugs, das durch mindestens einen elektrischen Fahrantriebsmotor angetrieben wird, wobei in einem ersten Betriebszustand eine Drehmomentregelung des Fahrantriebsmotors durchgeführt wird, bei der einer Stellung eines Fahrsignalgebers ein Solldrehmoment des Fahrantriebsmotors zugeordnet ist, und in einem zweiten Betriebszustand eine Drehzahlregelung des Fahrantriebsmotors durchgeführt wird, bei der einer Stellung des Fahrsignalgebers eine Solldrehzahl des Fahrantriebsmotors zugeordnet ist, und wobei in dem ersten Betriebszustand, in dem eine Abweichung zwischen der Solldrehzahl und einer Istdrehzahl des Fahrantriebsmotors groß ist, eine nichtlineare Regelung als Drehmomentregelung des Fahrantriebsmotors zum gleichmäßigen Beschleunigen und Abbremsen des Fahrantriebsmotors aktiv ist und in dem zweiten Betriebszustand, in dem vom Fahrantriebsmotor die Solldrehzahl nahe an der Istdrehzahl ist, deine Drehzahlregelung des Fahrantriebsmotors (17) mit vollständig aperiodischem Verlauf zu einer Annäherung an die gewünschte Enddrehzahl des Fahrantriebsmotors ohne Überschwinger aktiv ist, und wobei die Drehmomentregelung des Fahrantriebsmotors in dem ersten Betriebszustand erfolgt, wenn eine Abweichung der der Stellung des Fahrsignalgebers zugeordneten Solldrehzahl des Fahrantriebsmotors zur Istdrehzahl des Fahrantriebsmotors größer als ein in der Ableitung der Drehzahlkurve des Fahrantriebsmotors beim Übergang zwischen den ersten und zweiten Betriebszuständen eine Unstetigkeit vermeidender Drehzahlschwellenwert des Fahrantriebsmotors ist, und ansonsten in dem zweiten Betriebszustand der Fahrantriebsmotor geregelt wird.

Das Verfahren stellt eine Kombination von Drehmoment- und Drehzahlregelung dar, die über eine Steuerung umgeschaltet werden kann, wobei die Steuerung wie auch die Regelung als Software oder Hardware realisiert werden kann. Die jeweiligen Vorteile der beiden Regelungsverfahren werden kombiniert. Dies führt somit zu wesentlich besseren Resultaten im Fahrverhalten. Die Reaktion auf eine Fahrpedalbetätigung und das entsprechende reale Fahrverhalten für verschiedenste Betriebszustände werden wesentlich verbessert. Dabei kann der Schwellenwert für den Wechsel der Betriebszustände auf einen sinnvollen geringen Wert gesetzt werden, beispielsweise eine Prozentquote der maximal möglichen Gesamtdrehzahl, etwa beispielsweise 5 %. Erfindungsgemäß wird der Schwellenwert abhängig von der Regelcharakteristik in dem Bereich des zweiten Betriebszustand sowie dem Regelverhalten in dem ersten Betriebszustand so gewählt, dass der Verlauf einer Drehzahlkurve beim Übergang zwischen den Betriebszuständenglatt verläuft und in der Ableitung keine Unstetigkeit aufweist. Im Fall einer sehr starken Änderung des Ausgangssignals des Fahrsignalgebers kann aus diesem Wert eine theoretische anzustrebende Drehzahl bestimmt werden und durch Vergleich mit der Istdrehzahl des Fahrantriebs bestimmt werden, ob ein Wechsel in den ersten Betriebszustand erfolgen soll. Durch das erfindungsgemäße Verfahren ist es möglich, während des Fahrbetriebs durch die Kombination der zwei Betriebszustände Drehzahlregelung und Drehmomentregelung derart zu optimieren und zu kombinieren, dass ein optimales Beschleunigen und Abbremsen zu erzielen ist. In dem ersten Betriebszustand, in dem die Abweichung zwischen Solldrehzahl und Istdrehzahl groß ist, ist eine nichtlineare Regelung als Drehmomentregelung aktiv. Eine solche Regelung bietet ein gleichmäßiges Beschleunigen und Abbremsen mit einstellbarem Drehmomentverlauf. In dem zweiten Betriebszustand mit einer Solldrehzahl nahe an der Istdrehzahl ist eine Drehzahlregelung mit vollständig aperiodischem Verlauf aktiv, mit der eine zuverlässige und feinfühlige Annäherung an die gewünschte Drehzahl des Fahrantriebsmotors möglich ist.

Bei der Erfindung ist die Regelung in dem zweiten Betriebszustand vollständig aperiodisch.

Dadurch wird ein aperiodischer Übergangsprozess beim Erreichen der angestrebten Fahrzeuggeschwindigkeit bzw. Drehzahl des Fahrantriebes erzielt, durch den eine gewünschte und gut zu bedienende Geschwindigkeitssteuerung für einen Fahrer zur Verfügung gestellt wird.

Vorteilhaft erfolgt die Regelung in dem ersten Betriebszustand durch eine Drehmomentregelung, der in dem zweiten Betriebszustand eine Drehzahlregelung überlagert ist.

Die Drehmomentregelung kann durch eine Stromregelung erfolgen.

Bei sehr vielen Regelungsarten von Elektromotoren als Antriebsmotor ist das Drehmoment proportional zum Strom.

In einer günstigen Weitergestaltung des erfindungsgemäßen Verfahrens weist die Drehzahlregelung einen proportionalen Anteil sowie ein integralen Anteil auf und werden bei einem Wechsel von dem ersten Betriebszustand zu dem zweiten Betriebszustand oder umgekehrt der proportionalen Anteil und der integraler Anteil direkt angesteuert.

Dies ermöglicht bei einem Wechsel vom ersten Betriebszustand zu dem zweiten Betriebszustand und umgekehrt eine entsprechende Nachführung der Regelung, ohne dass es zu Sprüngen oder sonstigen unerwünschten unstetigen Übergangseffekten kommt.

In einer günstigen Weiterbildung des erfindungsgemäßen Verfahrens wird die optimale Güte der Übertragungsfunktion bestimmt durch $J_{opt}$ = -min(max

Re($\lambda_i$)).

Durch das Kriterium $J_{opt}$ = -min(max Re($\lambda_i$)) liegen alle Pole ($\lambda_i$) der Übertragungsfuntkion [G(s)] des Systems auf der reellen Achse links und mit maximaler Entfernung von der imaginären Achse. Dies führt zu sehr schnellen aperiodischen Übergangsprozessen in dem zweiten Betriebszustand. Die Regelung kann auch abhängig von speziellen Anforderungen im Einzelfall optimiert und mit Parametern angepasst werden. Beispielsweise ist eine Erzeugung der Übertragungsfunktion mithilfe des Dämpfungsoptimums möglich.

Vorteilhaft kann in dem zweiten Betriebszustand durch Vorgabe eines Soll-Drehzahlwertes eine automatische Geschwindigkeitsregelung umgesetzt werden.

Dadurch kann in dem zweiten Betriebszustand auf einfache und kostengünstige Weise zusätzlich eine Geschwindigkeitssteuerung im Sinne eines Tempomats verwirklicht werden, indem durch eine zusätzliche Eingabevorrichtung seitens des Fahrers eine Geschwindigkeit gewählt wird und diese Geschwindigkeit durch das Elektrofahrzeug sodann gehalten wird, ohne dass der Fahrsignalgeber betätigt werden muss.

Der Fahrantriebsmotor kann eine Asynchronmaschine sein.

Alternativ kann das erfindungsgemäße Verfahren auch für Gleichstromantriebe oder Synchronantriebe eingesetzt werden, wobei die Reglerparameter, insbesondere eine "Breite" des zweiten Betriebszustands im Verhältnis zu dem ersten Betriebszustand, durch Wahl eines entsprechenden Schwellenwertes angepasst werden kann.

In einer Ausgestaltung des erfindungsgemäßen Verfahrens ist der Fahrsignalgeber ein Fahrpedal.

In einer vorteilhaften Umsetzung des Verfahrens ist das Elektrofahrzeug ein Flurförderzeug, insbesondere ein Gabelstapler.

Insbesondere für Flurförderzeuge ist ein berechenbares und gut beherrschbares Fahrverhalten des Elektrofahrzeugs anzustreben, da durch die Bewegung des Elektrofahrzeuges das Positionieren der Last für das Absetzen bzw. das Ansteuern einer aufzunehmenden Last erfolgt.

Ebenso ist die Erfindung besonders vorteilhaft bei Elektrofahrzeugen, die im Sinne eines Kraftfahrzeuges für den Straßenverkehr eingesetzt werden.

Weitere Vorteile des erfindungsgemäßen Verfahrens werden anhand eines Ausführungsbeispiels geschildert, das in den Figuren dargestellt ist. Dabei zeigt die

Fig. 1 schematisch ein Modell eines Antriebsstrang eines erfindungsgemäßen Elektrofahrzeugs,

Fig. 2 ein Regelungsschema des erfindungsgemäßen Verfahrens und

Fig. 3 eine Istdrehzahl sowie eine Solldrehzahl bei einer Regelung gemäß dem erfindungsgemäßen Verfahren.

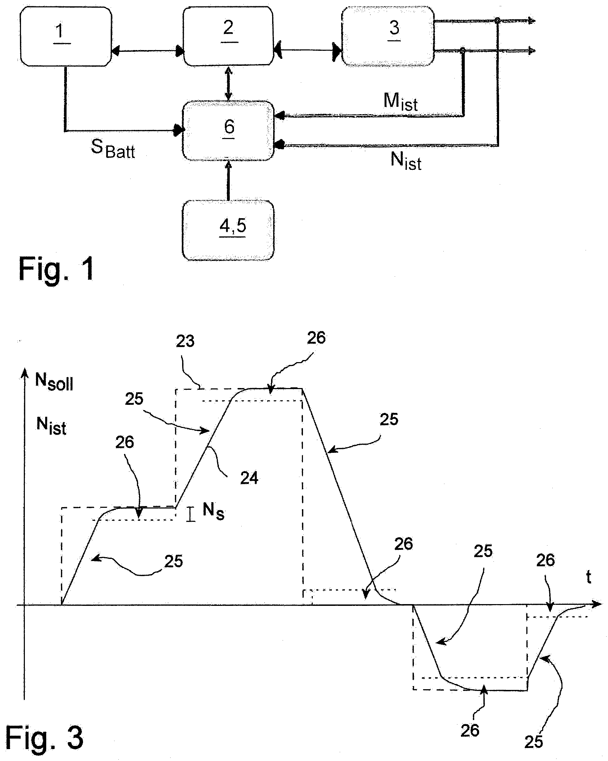

Die Fig. 1 zeigt schematisch ein Modell eines Antriebsstrangs eines erfindungsgemäßen Elektrofahrzeugs mit einer Fahrantriebsregelung. Eine Batterie 1 speist einen Umrichter 2, der eine Asynchronmaschine 3 als Fahrantriebsmotor ansteuert. Von einem Fahrpedal 4 als Fahrsignalgeber 5 wird einem Fahrantriebsregler 6 ein Sollwert vorgegeben. Der Fahrantriebsregler 6 steuert den Umrichter 2 an. Eine Istdrehzahl $N_{ist}$ und ein Istdrehmomentwert $M_{ist}$ werden an den Fahrantriebsregler 6 übermittelt. Weiterhin erhält der Fahrantriebsregler 6 noch ein Signal über den Batteriestatus $S_{Batt}$. Durch den Umrichter 2 kann die Asynchronmaschine 3 als Motor betrieben werden und das Elektrofahrzeug antreiben. Zusätzlich ist es auch möglich, die Asynchronmaschine 3 als Generator zu betreiben, wobei dann der Umrichter 2 elektrische Energie in einem Rekuperationsbetrieb in die Batterie 1 zurückspeist.

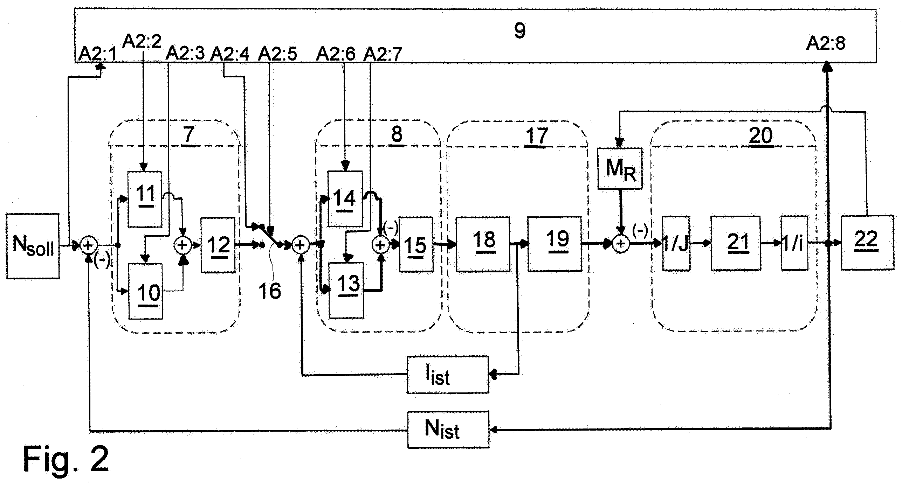

Die Fig. 2 zeigt ein Regelungsschema des Fahrantriebsreglers 6 des erfindungsgemäßen Verfahrens. Der Fahrantriebsregler 6 weist einen Drehzahlregler 7 und einem Stromregler 8 auf, die mit einem Rechenblock 9 gesteuert werden. Der Drehzahlregler 7 weist einen Proportionalanteil 10 und einen Integralanteil 11 mit einer entsprechenden Begrenzung 12 auf und verarbeitet einen Drehzahlsollwert $N_{soll}$ sowie eine Drehzahlrückführung eines Drehzahlistwerts $N_{ist}$ als Eingangsgrößen.

Dem Rechenblock 9 wird der Drehzahlsollwert $N_{soll}$ an einem Anschluss A2:1 zugeführt. Durch den Ausgang A2:5 kann der Drehzahlregler 7 über eine Steuerung zugeschaltet oder überbrückt werden, wie durch das Schaltsymbol 16 verdeutlicht. Der Rechenblock 9 kann über die Anschlüsse A2:2 und A2:3 direkt auf den Proportionalanteil 10 und den Integralanteil 11 des Drehzahlreglers 7 zugreifen, um beim Umschalten von dem ersten Betriebszustand auf den zweiten Betriebszustand oder umgekehrt eine entsprechende Nachführung des Drehzahlreglers 7 durchzuführen, so dass es nicht zu einem sprunghaften Verhalten des Drehzahlreglers 7 kommt.

Der Stromregler 8 baut ebenfalls auf einem Proportionalanteil 13 und einem Integralanteil 14 mit einer Begrenzung 15 auf und verarbeitet einen Stromistwert $I_{ist}$ als Eingangsgröße. Der Proportionalanteil 13 und der Integralanteil 14 des Stromreglers 8 werden durch Anschlüsse A2:6 und A2:7 von dem Rechenblock 9 beeinflusst sowie nachgeführt.

In dem Regelungsschema der Fig. 2 ist weiterhin der Fahrantriebsmotor 17 des Elektrofahrzeugs dargestellt, der einen Stromkreis 18 aufweist, der von dem Stromregler 8 angesteuert wird. Schematisch erfolgt in dem Block 19 die Umwandlung des Stroms in ein Drehmoment. In der Regelstrecke ist weiterhin ein Mechanikstrang 20 berücksichtigt, durch den das Verhalten durch die mechanische Trägheit des Antriebsstrangs beschrieben wird. Eine Veränderung der mechanischen Drehzahl wird durch die Trägheit 1/J, die sich wie ein integrales Glied 21 auswirkt, und die Übersetzung 1/i beschrieben und führt zu einer Rückkoppelung durch ein Lastmoment $M_R$, das an einem Rad 22 anliegt.

Dem Rechenblock 9 wird neben der von der Solldrehzahl $N_{soll}$ gebildeten Eingangsgröße A2:1 am Anschluss A2:8 direkt die Drehzahl $N_{ist}$ des Elektromotors bzw. Rades 22 zurückgeführt. Die Ausgangsgröße A2:4 wird als Sollwert-Vorgabe für das Drehmoment in dem ersten Betriebszustand vorgesehen.

Eine Abweichung der Solldrehzahl $N_{soll}$ größer als ein Schwellwert $N_s$ gegenüber der Istdrehzahl $N_{ist}$ ermöglicht eine Zustandserkennung und somit Feststellung, ob der Fahrantriebsregler 6 in dem ersten Betriebszustand oder in dem zweiten Betriebszustand arbeiten soll. Dabei kann die Solldrehzahl $N_{soll}$ abhängig von einer Stellung eines Fahrpedals als hypothetischer Wert bestimmt werden, beispielsweise indem von einem normalen Fahrwiderstand unabhängig von beispielsweise einem Gefälle oder einer Steigung wie auch von einer auf das Fahrzeug geladenen Last ausgegangen wird. Wenn eine auf solche Art bestimmte Drehzahlabweichung größer als der Schwellwert $N_s$ ist, erfolgt eine Regelung in dem ersten Betriebszustand.

In dem zweiten Betriebszustand erfolgt eine Nachführung des integrativen Anteils 11 Drehzahlreglers 7 und es wird eine Einstellung des proportionalen Anteils 10 des Drehzahlreglers 7 vorgenommen. In dem ersten Betriebszustand wird ein Stromsollwert entsprechend einem Drehmomentsollwert ermittelt. Durch den Schalter 16, der von dem Anschluss A2:5 geschaltet wird, kann die Umschaltung zwischen dem ersten Betriebszustand und dem zweiten Betriebszustand erfolgen. In dem zweiten Betriebszustand ist demnach der Stromregler 8 aktiv und zusätzlich der Drehzahlregler 7. In dem ersten Betriebszustand erfolgt durch den Anschluss A2:6 eine Nachführung des integrativen Anteils 14 des Stromreglers 8 und durch den Anschluss A2:7 eine Einstellung des proportionalen Anteils 13 des Stromreglers 8.

In den ersten Betriebszustand ist folglich bei einer Abweichung der Solldrehzahl $N_{soll}$ größer als ein Schwellwert $N_s$ gegenüber der Istdrehzahl $N_{ist}$ eine nichtlineare Regelung bzw. Drehmomentregelung aktiv. Durch eine solche Regelung wird eine gleichmäßige Beschleunigung bzw. ein gleichmäßiges Abbremsen mit einstellbarem Drehmomentverlauf ermöglicht.

In dem zweiten Betriebszustand wird erfindungsgemäß unter dem Kriterium maximaler Präzision der Drehzahl des Fahrantriebsmotors (17) geregelt unter Abhängigkeit von dem Lastmoment des Fahrantriebs. Diese Regelung ist vollständig aperiodisch, da eine maximale Dämpfung des gesamten elektronischen, elektrischen und mechanischen Systems angestrebt wird. Dadurch kommt es zu keinen Überschwingern und werden die geschilderten Nachteile einer alleinigen Drehzahlregelung vermieden.

Die Fig. 3 zeigt eine Istdrehzahl $N_{ist}$ sowie eine Solldrehzahl $N_{soll}$ über der Zeit t bei einer Regelung gemäß dem erfindungsgemäßen Verfahren. Dies Solldrehzahl $N_{soll}$ wird aus dem Vorgabewert eines Fahrpedals bestimmt, beispielsweise indem die sich bei Leerfahrt in der Ebene zu einem bestimmten Stellwert des Fahrpedals einstellende Endgeschwindigkeit bestimmt wird und ist als gestrichelte Linie 23 aufgetragen. Die Istdrehzahl $N_{ist}$ folgt dieser und ist als durchgezogene Linie 24 aufgetragen. Dabei erfolgt die Regelung zunächst in einem ersten Betriebszustand 25, indem nur eine Drehmomentregelung stattfindet. Wenn die Istdrehzahl $N_{ist}$ sich an die zuvor bestimmte Solldrehzahl $N_{soll}$ oder auch an eine aufgrund des Lastmoments bei der Stellung des Fahrpedals nur erreichbare Drehzahl um weniger als den Schwellwert $N_s$ angenähert hat, wird in einen zweiten Betriebszustand 26 mit Drehzahlregelung umgeschaltet und in diesem geregelt. In dem zweiten Betriebszustand 26 erfolgt erfindungsgemäß eine vollständig aperiodische Annäherung an die Enddrehzahl des Fahrantriebs.

**Patentansprüche**

1. Verfahren zur Regelung eines Fahrantriebs eines Elektrofahrzeugs, das durch mindestens einen elektrischen Fahrantriebsmotor (17) angetrieben wird,

   wobei in einem ersten Betriebszustand (25) eine Drehmomentregelung des Fahrantriebsmotors (17) durchgeführt wird, bei der einer Stellung eines Fahrsignalgebers (5) ein Solldrehmoment des Fahrantriebsmotors (17) zugeordnet ist, und in einem zweiten Betriebszustand (26) eine Drehzahlregelung des Fahrantriebsmotors (17) durchgeführt wird, bei der einer Stellung des Fahrsignalgebers (5) eine Solldrehzahl ($N_{soll}$) des Fahrantriebsmotors (17) zugeordnet ist, **dadurch gekennzeichnet, dass** in dem ersten Betriebszustand (25), in dem eine Abweichung zwischen der Solldrehzahl ($N_{soll}$) und einer Istdrehzahl ($N_{ist}$) des Fahrantriebsmotors (17) groß ist, eine nichtlineare Regelung als Drehmomentregelung des Fahrantriebsmotors (17) zum gleichmäßigen Beschleunigen und Abbremsen des Fahrantriebsmotors (17) aktiv ist und in dem zweiten Betriebszustand (26), in dem vom Fahrantriebsmotor (17) die Solldrehzahl ($N_{soll}$) nahe an der Istdrehzahl ($N_{ist}$) ist, eine Drehzahlregelung des Fahrantriebsmotors (17) mit vollständig aperiodischem Verlauf zu einer Annäherung an die gewünschte Enddrehzahl des Fahrantriebsmotors (17) ohne Überschwinger aktiv ist, und dass die Drehmomentregelung des Fahrantriebsmotors (17) in dem ersten Betriebszustand (25) erfolgt, wenn eine Abweichung der der Stellung des Fahrsignalgebers (5) zugeordneten Solldrehzahl ($N_{soll}$) des Fahrantriebsmotors (17) zur Istdrehzahl ($N_{ist}$) des Fahrantriebsmotors (17) grö-

ßer als ein in der Ableitung der Drehzahlkurve des Fahrantriebsmotors (17) beim Übergang zwischen den ersten und zweiten Betriebszuständen eine Unstetigkeit vermeidender Drehzahlschwellenwert (Ns) des Fahrantriebsmotors (17) ist, und ansonsten in dem zweiten Betriebszustand (26) der Fahrantriebsmotor (17) geregelt wird.

**2.** Verfahren nach Anspruch 1,
**dadurch gekennzeichnet,**
**dass** die Regelung des Fahrantriebsmotors (17) in dem ersten Betriebszustand (25) durch die Drehmomentregelung erfolgt, der in dem zweiten Betriebszustand (26) die Drehzahlregelung (7) des Fahrantriebsmotors (17) überlagert ist.

**3.** Verfahren nach Anspruch 2,
**dadurch gekennzeichnet,**
**dass** die Drehmomentregelung des Fahrantriebsmotors (17) durch eine Stromregelung (8) des Fahrantriebsmotors (17) erfolgt.

**4.** Verfahren nach Anspruch 2 oder 3,
**dadurch gekennzeichnet,**
**dass** die Drehzahlregelung (7) des Fahrantriebsmotors (17) einen proportionalen Anteil (10) sowie einen integralen Anteil (11) aufweist und bei einem Wechsel von dem ersten Betriebszustand (25) zu dem zweiten Betriebszustand (26) oder umgekehrt der proportionale Anteil (10) und der integrale Anteil (11) direkt angesteuert werden.

**5.** Verfahren nach einem der Ansprüche 1 bis 4,
**dadurch gekennzeichnet,**
**dass** die optimale Güte der Übertragungsfunktion bestimmt wird durch

$$J_{opt} = -\min(\max \mathrm{Re}(\lambda_i)).$$

**6.** Verfahren nach einem der Ansprüche 1 bis 5,
**dadurch gekennzeichnet,**
**dass** in dem zweiten Betriebszustand (26) durch Vorgabe eines Soll-Drehzahlwertes ($N_{soll}$) des Fahrantriebsmotors (17) eine automatische Geschwindigkeitsregelung des Fahrantriebsmotors (17) umgesetzt werden kann.

**7.** Verfahren nach einem der Ansprüche 1 bis 6,
**dadurch gekennzeichnet,**
**dass** der Fahrantriebsmotor (17) eine Asynchronmaschine (3) ist.

**8.** Verfahren nach einem der Ansprüche 1 bis 7,
**dadurch gekennzeichnet,**
**dass** der Fahrsignalgeber (5) ein Fahrpedal ist.

**9.** Verfahren nach einem der Ansprüche 1 bis 8,
**dadurch gekennzeichnet,**
**dass** das Elektrofahrzeug ein Flurförderzeug, insbesondere ein Gabelstapler, ist.

## Claims

**1.** Method for controlling a drive of an electric vehicle that is driven by at least one electric drive motor (17), wherein, in a first operating state (25), the drive motor (17) is subjected to torque control, in which a setpoint torque of the drive motor (17) is assigned to a position of a driving signal generator (5) and, in a second operating state (26), the drive motor (17) is subjected to speed control, in which a setpoint speed ($N_{setpoint}$) of the drive motor (17) is assigned to a position of the driving signal generator (5),
**characterized in that,**
in the first operating state (25), in which a deviation between the setpoint speed ($N_{setpoint}$) and an actual speed ($N_{actual}$) of the drive motor (17) is large, nonlinear control is active as torque control of the drive motor (17) in order to uniformly accelerate and brake the drive motor (17) and, in the second operating state (26) in which the setpoint speed ($N_{setpoint}$) is close to the actual speed ($N_{actual}$) for the drive motor (17), speed control of the drive motor (17) with a completely aperiodic profile is active in order to approach the desired end speed of the drive motor (17) without overshooting it, and **in that** the drive motor (17) is subjected to torque control in the first operating state (25) when a deviation between the setpoint speed ($N_{setpoint}$), assigned to the position of the driving signal generator (5), of the drive motor (17) with respect to the actual speed ($N_{actual}$) of the drive motor (17) is greater than a speed threshold value (Ns) of the drive motor (17) that avoids unsteadiness when deriving the speed curve of the drive motor (17) in the transition between the first and second operating states, and otherwise is controlled in the second operating state (26) of the drive motor (17).

**2.** Method according to Claim 1,
**characterized in that**
the drive motor (17) is controlled in the first operating state (25) through the torque control on which the speed control (7) of the drive motor (17) is overlaid in the second operating state (26).

**3.** Method according to Claim 2,
**characterized in that**
the torque of the drive motor (17) is controlled through current control (8) of the drive motor (17).

**4.** Method according to Claim 2 or 3,
**characterized in that**
the speed control (7) of the drive motor (17) has a proportional component (10) and an integral component (11) and, in the event of a change from the first operating state (25) to the second operating state (26) or vice versa, the proportional component (10) and the integral component (11) are driven directly.

5. Method according to one of Claims 1 to 4, **characterized in that**
the optimum quality of the transfer function is defined by $J_{opt}$ = -min (max Re ($\lambda_i$)).

6. Method according to one of Claims 1 to 5, **characterized in that,**
in the second operating state (26), automatic speed control of the drive motor (17) is able to be implemented by specifying a setpoint speed value ($N_{setpoint}$) of the drive motor (17).

7. Method according to one of Claims 1 to 6, **characterized in that**
the drive motor (17) is an asynchronous machine (3).

8. Method according to one of Claims 1 to 7, **characterized in that**
the driving signal generator (5) is an acceleration pedal.

9. Method according to one of Claims 1 to 8, **characterized in that**
the electric vehicle is an industrial truck, in particular a forklift truck.

**Revendications**

1. Procédé de régulation d'un entraînement en déplacement d'un véhicule électrique, qui est entraîné par au moins un moteur électrique d'entraînement en déplacement (17), une régulation de couple du moteur d'entraînement en déplacement (17) étant effectuée dans un premier état de fonctionnement (25), dans lequel un couple de consigne du moteur d'entraînement en déplacement (17) est associé à une position d'un émetteur de signaux de déplacement (5), et une régulation de vitesse de rotation du moteur d'entraînement en déplacement (17) étant effectuée dans un deuxième état de fonctionnement (26), dans lequel une vitesse de rotation de consigne ($N_{consigne}$) du moteur d'entraînement en déplacement (17) est associée à une position de l'émetteur de signaux de déplacement (5), **caractérisé en ce que**
dans le premier état de fonctionnement (25), dans lequel un écart entre la vitesse de rotation de consigne ($N_{consigne}$) et une vitesse de rotation réelle ($N_{réelle}$) du moteur d'entraînement en déplacement (17) est important, une régulation non linéaire en tant que régulation de couple du moteur d'entraînement en déplacement (17) est active pour accélérer et freiner uniformément le moteur d'entraînement en déplacement (17) et, dans le deuxième état de fonctionnement (26), dans lequel la vitesse de rotation de consigne ($N_{consigne}$) du moteur d'entraînement en déplacement (17) est proche de la vitesse de rotation réelle ($N_{réelle}$), une régulation de vitesse de rotation du moteur d'entraînement en déplacement (17) est active avec une allure entièrement apériodique pour se rapprocher de la vitesse de rotation finale souhaitée du moteur d'entraînement en déplacement (17) sans suroscillation, et **en ce que** la régulation de couple du moteur d'entraînement en déplacement (17) est effectuée dans le premier état de fonctionnement (25) lorsqu'un écart entre la vitesse de rotation de consigne ($N_{consigne}$) du moteur d'entraînement en déplacement (17) associée à la position de l'émetteur de signaux de déplacement (5) et la vitesse de rotation réelle ($N_{réelle}$) du moteur d'entraînement en déplacement (17) est supérieur à une valeur de seuil de vitesse de rotation ($N_s$) du moteur d'entraînement en déplacement (17) évitant une discontinuité dans la dérivée de la courbe de vitesse de rotation du moteur d'entraînement en déplacement (17) lors de la transition entre le premier et le deuxième état de fonctionnement, et sinon, dans le deuxième état de fonctionnement (26), le moteur d'entraînement en déplacement (17) est régulé.

2. Procédé selon la revendication 1, **caractérisé en ce que**
la régulation du moteur d'entraînement en déplacement (17) est effectuée dans le premier état de fonctionnement (25) par la régulation de couple, à laquelle est superposée, dans le deuxième état de fonctionnement (26), la régulation de vitesse de rotation (7) du moteur d'entraînement en déplacement (17).

3. Procédé selon la revendication 2, **caractérisé en ce que**
la régulation de couple du moteur d'entraînement en déplacement (17) est effectuée par une régulation de courant (8) du moteur d'entraînement en déplacement (17).

4. Procédé selon la revendication 2 ou 3, **caractérisé en ce que**
la régulation de vitesse de rotation (7) du moteur d'entraînement en déplacement (17) présente une partie proportionnelle (10) ainsi qu'une partie intégrale (11) et, lors d'un passage du premier état de fonctionnement (25) au deuxième état de fonctionnement (26) ou inversement, la partie proportionnelle (10) et la partie intégrale (11) sont directement commandées.

**5.** Procédé selon l'une quelconque des revendications 1 à 4,
**caractérisé en ce que**
la qualité optimale de la fonction de transfert est déterminé par $J_{opt} = -\min(\max Re(\lambda_i))$.

**6.** Procédé selon l'une quelconque des revendications 1 à 5,
**caractérisé en ce que**
dans le deuxième état de fonctionnement (26), une régulation automatique de la vitesse du moteur d'entraînement en déplacement (17) peut être mise en œuvre par la prescription d'une valeur de vitesse de rotation de consigne ($N_{consigne}$) du moteur d'entraînement en déplacement (17).

**7.** Procédé selon l'une quelconque des revendications 1 à 6,
**caractérisé en ce que**
le moteur d'entraînement en déplacement (17) est une machine asynchrone (3).

**8.** Procédé selon l'une quelconque des revendications 1 à 7,
**caractérisé en ce que**
l'émetteur de signaux de déplacement (5) est une pédale d'accélération.

**9.** Procédé selon l'une quelconque des revendications 1 à 8,
**caractérisé en ce que**
le véhicule électrique est un engin de manutention, en particulier un chariot élévateur à fourche.

**Fig. 1**

**Fig. 3**

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1916142 A2
- DE 102010020906 A1
- EP 1764254 A1
- JP 2003199214 A
- DE 4226469 C2